# EUROPÄISCHE PATENTSCHRIFT

(11) **EP 2 782 966 B1**
(45) Veröffentlichungstag und Bekanntmachung des Hinweises auf die Patenterteilung: **28.09.2016**
(21) Anmeldenummer: 12791472.9
(22) Anmeldetag: 22.11.2012
(51) Int. Cl.: C09D 7/00

(54) **LÖSEMITTELHALTIGE KLARLACKBESCHICHTUNGSZUSAMMENSETZUNG, VERFAHREN ZU IHRER HERSTELLUNG UND IHRE VERWENDUNG**
SOLVENTBORNE CLEARCOAT COATING COMPOSITION, PROCESS FOR PRODUCING IT AND USE THEREOF
COMPOSITION DE REVÊTEMENT DE PEINTURE VERNIE CONTENANT UN SOLVANT, PROCÉDÉ DE PRÉPARATION ET UTILISATION DE LADITE COMPOSITION

(30) Priorität: 25.11.2011 US 201161563623 P; 25.11.2011 EP 11190752
(43) Veröffentlichungstag der Anmeldung: 01.10.2014
(73) Patentinhaber: BASF Coatings GmbH, 48165 Münster (DE)
(72) Erfinder: WEGNER, Egon, 48268 Greven (DE); MAYENFELS, Peter, 48163 Münster (DE)
(74) Vertreter: Leifert & Steffan
(86) Internationale Anmeldenummer: PCT/EP2012/073392
(87) Internationale Veröffentlichungsnummer: WO 2013/076208

(56) Entgegenhaltungen:
- EP-A1- 2 292 675
- EP-A2- 0 129 124
- WO-A1-02/44235
- WO-A1-94/22968
- WO-A1-2004/069884
- WO-A1-2004/111139
- WO-A1-2010/121791
- WO-A2-03/000807
- US-A- 4 444 954

## Beschreibung

Die vorliegende Erfindung betrifft eine lösemittelhaltige Klarlackbeschichtungszusammensetzung, enthaltend mindestens zwei OH-funktionelle (Meth)acrylat(co)polymerisate als Bindemittel, mindestens eine Art von synthetischen Polyamidwachspartikeln, mindestens eine Harnstoffverbindung als Additionsprodukt eines Polyisocyanats und eines Monoamins sowie ein Vernetzungsmittel mit gegenüber OH-Gruppen reaktiven funktionellen Gruppen. Weiterhin betrifft die vorliegende Erfindung die Herstellung der Klarlackbeschichtungszusammensetzung sowie deren Verwendung zur Beschichtung unterschiedlicher Substrate.

In der heutigen Automobillackierung werden unterschiedliche Substrate wie z. B. aus Metall oder Kunststoff hergestellte Karosserien und Karosserieteile lackiert. Häufig werden dabei Mehrschichtlackierungen aufgebaut. Mehrschichtlackierungen von metallischen Substraten bestehen häufig aus einer Elektrotauchlackschicht, einer Füllerschicht, einer Basislackschicht und einer Klarlackschicht. Im Falle von Kunststoffsubstraten werden entweder einschichtige Lackierungen oder ebenfalls Mehrschichtlackierungen aufgebaut. In letzterem Fall werden die üblichen, in der Kunststofflackierung einsetzbaren Füller-, Einschichtdecklack-, Basislack- und Klarlackbeschichtungszusammensetzungen, deren Auswahl und Einsatz dem Fachmann bekannt sind, eingesetzt.

Der hohe technologische Anspruch, der an Lackierungen im Bereich der heutigen Automobilindustrie gestellt wird, sowie die Funktionen und technologischen Eigenschaften der jeweiligen einzelnen oben genannten Lackschichten, sind dem Fachmann bekannt. Dabei prägen insbesondere die Klarlackierungen so wesentliche technische Eigenschaften wie z. B den Glanz und die Brillanz beziehungsweise die Abbildungsunterscheidbarkeit (DOI, distinctiveness of image), die Witterungsstabilität sowie die Beständigkeit gegen Schwitzwasser und Weißanlaufen der lackierten Oberfläche. Von zentraler Bedeutung für diese Eigenschaften ist es, dass die für den Aufbau von Klarlackierungen notwendigen Klarlackbeschichtungszusammensetzungen hervorragende Applikationseigenschaften aufweisen. Das heißt insbesondere, dass die Beschichtungszusammensetzungen einen guten Verlauf aufweisen müssen. Dies bedeutet, dass die Klarlackbeschichtungszusammensetzungen solche Fließeigenschaften aufweisen müssen, dass nach Ihrer Applikation auf ein Substrat Unebenheiten, die z. B. durch Spritznebel entstanden sind, ausgeglichen werden und somit eine glatte Oberfläche der Lackierung resultiert. Ebenso wichtig ist es andererseits, dass die Beschichtungszusammensetzungen ein gutes Ablaufverhalten aufweisen. Wie dem Fachmann bekannt ist, besteht nach der Applikation von Beschichtungszusammensetzungen auf ein Substrat, solange wie sich die Beschichtungszusammensetzungen noch im flüssigen Zustand befinden, das Risiko einer Läuferbildung. Gemeint ist hierbei, dass die aufgetragenen, noch flüssigen Beschichtungszusammensetzungen teilweise absacken. Dadurch entsteht ein recht auffälliger Lackiermangel in der später ausgehärteten Lackierung. Die Neigung zur Läuferbildung steigt überproportional mit der gewählten Nassschichtdicke, die daher entsprechend zu wählen ist. Allerdings darf diese auch nicht zu gering gewählt werden, um eine komplette Bedeckung der Substratoberfläche zu gewährleisten und die Anforderungen an die Oberflächengüte zu erfüllen. Bei der Lackierung komplex geformter Gegenstände, wie sie im Rahmen der Automobillackierung häufig vorkommen (z. B. Karosserien, Türen oder Stoßstangen), tritt das Problem der Läuferbildung gehäuft auf, da es in diesem Fall nicht möglich ist, die gesamte Oberfläche in horizontaler Lage zu lackieren.

Ein weiteres Problem, das gerade im Bereich der Automobillackierung eine große Rolle spielt, ist die Ringleitungsstabilität der Beschichtungszusammensetzungen. Durch das ständige Umwälzen in den Applikationsanlagen sind die Beschichtungszusammensetzungen einer fortwährenden Belastung beziehungsweise Scherbeanspruchung ausgesetzt, die häufig zu einer signifikanten Änderung der rheologischen Eigenschaften, z. B. der Viskosität, führt und damit die oben genannten Applikationseigenschaften negativ beeinflussen kann.

Die bisher bekannten lösemittelhaltigen Klarlackbeschichtungszusammensetzungen, sind häufig nicht in der Lage, einen guten Verlauf zu gewährleisten und dabei die Bildung von Läufern in den hieraus hergestellten Klarlackierungen zu vermeiden. Um die Probleme zu lösen, reduzieren die Automobilhersteller häufig die Schichtdicke der Klarlackierungen, was aber so wesentliche anwendungstechnische Eigenschaften wie Decklackstand, Verlauf, Glanz, Abbildungsunterscheidbarkeit und Witterungs- und UV-Beständigkeit stark beeinträchtigt und zu einer Vermattung der Klarlackierungen führen kann. Seitens der Klarlackhersteller wird versucht, die Probleme durch die Zugabe größerer Mengen an Rheologiehilfsmitteln oder rheologiesteuernden Additiven, wie die aus den Anmeldungen WO 94/22968 A1, EP 0 276 501 A1, EP 0 249 201A1oder WO 97/12945 A1bekannten Sag Control Agents (SCA), die beispielsweise auf bestimmten Harnstoffaddukten basieren, zu vermeiden. Ebenfalls eingesetzt werden die vernetzten polymeren Mikroteilchen, wie sie beispielsweise in der EP 0 008 127 A1 offenbart sind, die anorganischen Schichtsilikate wie Aluminium-Magnesium-Silikate, Natrium-Magnesium-und Natrium-Magnesium-Fluor-Lithium-Schichtsilikate des Montmorillonit-Typs, die Kieselsäuren wie Aerosile, oder die synthetischen Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid-oder Ethylen-Maleinsäureanhydrid-Copolymere und ihren Derivate oder hydrophob modifizierte ethoxylierte Urethane oder Polyacrylate. Allerdings kann diese Verwendung zu einer Verschlechterung des Decklackstandes führen, weil beispielsweise der Verlauf der Klarlacke beeinträchtigt ist.

Die Verwendung von Polyamiden als Verdicker für lösemittelhaltige Beschichtungsstoffe ist aus dem Lehrbuch "Lackadditive" von Johan Bieleman, Wiley-VCH, Weinheim, New York, 1998, Seite 62, sowie aus der Anmeldung WO 04/11139 bekannt.

Außerdem ist es z. B. aus dem technischen Merkblatt 11. 20. 3 der Firma C. H. Erbslöh, DISPARLON 6900-20X , Oktober 1986, bekannt, gequollene Partikel aus synthetischem Polyamid-Wachs als Anti-Läufer-/Anti- Absetzmittel für lösemittelbasierende Harzsysteme (z. B. Klarlacke), Lösemittel, dickschichtige Überzüge aus Epoxidharzen, Teer-Epoxidharz-Gemischen, Teer-Polyurethan-Gemischen und Chlorkautschuk, Aluminiumpigmente in Autolacken, schwere Pigmente in Rostschutz-Anstrichen und Teppichrücken- Beschichtungen und Gel-Überzüge (Glasfaserkunststoffe) zu verwenden. In der Patentanmeldung WO 2004/111139 A1 wird eine Kombination einer auf Hexylamin basierenden Harnstoffverbindung und von Polyamid-Wachs-Partikeln als Rheologiehilfsmittel eingesetzt. Jedoch gelingt es auch durch die Verwendung dieser gequollenen Partikel aus synthetischem Polyamid-Wachs beziehungsweise ihrer Kombination mit der genannten Harnstoffverbindung nicht, die vorstehend angesprochenen Probleme zufriedenstellend zu lösen und eine gute Balance von Applikationseigenschaften wie Verlauf und Läuferbildung gepaart mit einer guten Stabilität gegen Scherbeanspruchung sowie Lackierungseigenschaften wie z. B. einer guten Schwitzwasserbeständigkeit zu erreichen.

Aufgabe der vorliegenden Erfindung ist es demnach, eine Klarlackbeschichtungszusammensetzung bereitzustellen, die die Nachteile des Stands der Technik nicht mehr aufweist, sondern eine hervorragende Balance zwischen den Applikationseigenschaften Verlauf und Läuferbildung aufweist, sodass die nach der Härtung resultierende Klarlackierung auf einem Substrat eine hohe optische Qualität, z. B. einen hohen Glanz, aufweist. Daneben sollen die gehärteten Lackierungen eine gute Beständigkeit gegen Schwitzwasser und Weißanlaufen aufweisen. Zudem sollen auch weitere wichtige technologische Anforderungen erfüllt sein, die an Beschichtungsmittel zur Verwendung insbesondere im Bereich der Automobillackierung gestellt werden. Insbesondere sollen die Klarlackbeschichtungsmittel eine gute Ringleitungsstabilität beziehungsweise Stabilität bei Scherbeanspruchung besitzen, das heißt ihr rheologisches Eigenschaftsprofil, insbesondere ihre Viskosität, soll sich trotz einwirkender Scherbeanspruchung nicht zu stark ändern. Auf diese Weise sollen die oben genannten Applikationseigenschaften trotz längerer Umwälzung in z. B. Ringleitungsanlagen erhalten bleiben.

Im Rahmen der Erfindung hat sich gezeigt, dass diese Aufgaben gelöst werden konnten durch eine lösemittelhaltige Klarlackbeschichtungszusammensetzung gemäß Anspruch 1.

Im Folgenden wird die lösemittelhaltige Klarlackbeschichtungszusammensetzung als erfindungsgemäße Klarlackbeschichtungszusammensetzung bezeichnet. Die erfindungsgemäße Klarlackbeschichtungszusammensetzung weist eine gute Stabilität gegen Scherbeanspruchung auf und besitzt zudem hervorragende Applikationseigenschaften. Nach der Applikation auf einem Substrat wird eine sehr gute Balance von angemessenem Verlauf und nur geringer Läuferneigung erreicht, sodass die gehärteten Klarlackierungen beispielsweise einen guten Glanz aufweisen. Zudem wird eine gute Schwitzwasserbeständigkeit erreicht. Als Substrate eignen sich hervorragend aus Metall oder Kunststoff hergestellte Karosserien und Karosserieteile aus dem Bereich der Automobillackierung, die häufig komplex geformt sind. Die Klarlackbeschichtungszusammensetzung kann zum Aufbau einer Klarlackierung dienen, die entweder für sich allein oder im Rahmen einer Mehrschichtlackierung ein Metall- oder Kunststoffsubstrat bedeckt.

Im Rahmen der vorliegenden Erfindung wurden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird eine Menge von 2 g des jeweiligen Bestandteils, beispielsweise einer Dispersion eines Polymers beziehungsweise Harzes in entsprechenden Lösemitteln, für 2 h bei 125°C erhitzt, auf 20°C abgekühlt und dann der Restgehalt gewogen (vgl. auch ISO 3251). Ermittelt wurde der nicht-flüchtige Anteil beispielsweise von entsprechenden Dispersionen von Polymeren beziehungsweise Harzen, die in der erfindungsgemäßen Klarlackbeschichtungszusammensetzung enthalten sind, um dadurch beispielsweise den Gewichtsanteil eines bestimmten Bestandteils in Bezug auf die Menge eines anderen Bestandteils bestimmen zu können.

Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2 (Determination of hydroxyl value - Part 2: Method with catalyst) experimentell durch Titration bestimmt.

Die Glasübergangstemperatur T_{g} wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

### (A) OH-funktionelle (Meth)Acrylat(co)polymerisat-Komponente

Die Klarlackbeschichtungszusammensetzung enthält eine OH-funktionelle (Meth)Acrylat(co)polymerisat-Komponente (A). Die Komponente (A) enthält mindestens ein wie weiter unten spezifiziertes OH-funktionelles (Meth)Acrylat(co)polymerisat (A1) sowie mindestens ein wie weiter unten spezifiziertes OH-funktionelles (Meth)Acrylat(co)polymerisat (A2).

Unter (Meth)Acrylat(co)polymerisat wird bekanntermaßen eine polymere organische Verbindung verstanden, die sich aus unterschiedlichen Acrylat- und/oder Methacrylatmonomeren zusammensetzen. Die Bezeichnung (Meth)acrylat steht im Rahmen der Erfindung für Acrylate und/oder Methacrylate beziehungsweise solche Verbindungen, die Acrylate und/oder Methacrylate beinhalten beziehungsweise aus diesem aufgebaut sind. Als Beispiele für solche Acrylat- und Methacrylatmonomere sind unterschiedliche Alkyl(meth)acrylate und Cycloalkyl(meth)acrylate zu nennen, wie z. B. die dem Fachmann bekannten Verbindungen Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate sowie Cyclopentylacrylat, Cyclopentylmethacrylat, Isobornylacrylat, Isobornylmethacrylat, Cyclohexylacrylat und Cyclohexylmethacrylat.

Die (Meth)Acrylat(co)polymerisate (A1) und (A2) sind OH-funktionell und weisen eine OH-Zahl von 60 - 200 mg KOH/g, vorzugsweise 70 - 180 mg KOH/g, ganz besonders bevorzugt von 80 - 160 mg KOH/g, auf. Dementsprechend sind in das Polymergerüst bestimmte Anteile solcher Acrylat- und Methacrylatmonomere eingebaut, die OH-Gruppen aufweisen und damit die OH-Funktionalität der (Meth)Acrylat(co)polymerisat-Bindemittel ausmachen.

Als hydroxylgruppenhaltige Monomerbausteine zur Herstellung der (Meth)Acrylat(co)polymerisate (A1) und (A2) werden Hydroxyalkyl(meth)acrylate, wie beispielsweise 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine für die (Meth)Acrylat(co)polymerisate (A1) und (A2) können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Das mindestens eine (Meth)Acrylat(co)polymerisat (A1) weist eine Glasübergangstemperatur T_{g} von 15°C bis 100°C, vorzugsweise von 20°C bis 70°C, ganz besonders bevorzugt von 25°C bis 50°C, auf. Das mindestens eine (Meth)Acrylat(co)polymerisat (A2) besitzt eine Glasübergangstemperatur T_{g} von - 100°C bis -20°C, vorzugsweise -90°C bis -35°C, ganz besonders bevorzugt von - 80°C bis -45°C. Wie dem Fachmann auf dem Gebiet bekannt ist, bestimmt sich die Glasübergangstemperatur von (Meth)Acrylat(co)polymerisaten beispielsweise durch die Art der enthaltenen Monomere und deren Anteilen am Polymer. Eine entsprechende Auswahl kann vom Fachmann ohne größeren Aufwand getroffen werden.

Der Anteil des (Meth)Acrylat(co)polymerisats (A1), bezogen auf die Masse des nichtflüchtigen Anteils der OH-funktionellen (Meth)Acrylat(co)polymerisat-Komponente (A), liegt erfindungsgemäß bei 30 - 99 Gew.-%, vorzugsweise bei 55 - 90 Gew.-%, insbesondere bei 70 - 85 Gew.-%.

Der Anteil des (Meth)Acrylat(co)polymerisat-Bindemittel (A2), bezogen auf die Masse des nicht-flüchtigen Anteils der OH-funktionellen (Meth)Acrylat(co)polymerisat-Komponente (A), liegt erfindungsgemäß bei 1 - 70 Gew. %, vorzugsweise bei 10 - 45 Gew.-%, insbesondere bei 15 - 30 Gew.-%.

Vorzugsweise ist der Anteil des (Meth)Acrylat(co)polymerisats (A1), bezogen auf die Masse des nicht-flüchtigen Anteils der gesamten Beschichtungszusammensetzung, größer als der Anteil des (Meth)Acrylat(co)polymerisats (A2) mit der niedrigeren Glasübergangstemperatur. Bevorzugt ist der Anteil des (Meth)Acrylat(co)polymerisat (A1) mehr als doppelt so hoch wie der Anteil des (Meth)Acrylat(co)polymerisat (A2).

Der Anteil der OH-funktionellen (Meth)Acrylat(co)polymerisat-Komponente (A) an der gesamten Beschichtungsmittelzusammensetzung liegt zwischen 30 bis 80 Gew.-%, besonders bevorzugt zwischen 40 bis 70 Gew.-%, insbesondere 45 bis 55 Gew.-%, jeweils bezogen auf den nicht-flüchtigen Anteil der gesamten Klarlackbeschichtungszusammensetzung.

Die Molekulargewichte der (Meth)Acrylat(co)polymerisate (A1) und (A2) liegen in den dem Fachmann geläufigen Bereichen und sind letztlich keinen Beschränkungen unterworfen. Bevorzugt sind zahlenmittlere Molekulargewichte Mₙ zwischen 1000 bis 20000 g/mol, insbesondere zwischen 1000 bis 10000 g/mol.

Das zahlenmittlere Molekulargewicht Mₙ wird mittels Gelpermeationschromatographie bei 40°C mit einer Hochdruckflüssigkeitschromatographie-Pumpe und einem Brechungsindexdetektor bestimmt. Als Elutionsmittel wurde Tetrahydrofuran mit einer Elutionsgeschwindigkeit von 1 mL/min verwendet. Die Kalibrierung wird mittels Polystyrol-Standards durchgeführt.

Als (Meth)Acrylat(co)polymerisate (A1) und (A2) können sowohl übliche im Handel erhältliche als auch selbst hergestellte (Meth)Acrylat(co)polymerisate verwendet werden. Als handelsübliche (Meth)Acrylat(co)polymerisate sind beispielsweise die Polyacrylate der Produktreihe "Macrynal" (Cytec Surface Specialities) oder der Produktreihe Setalux, beispielsweise Setalux 1753 SS-70, (Nuplex Resins) zu nennen.

Die Herstellung der (Meth)Acrylat(co)polymerisate (A1) und (A2) weist keine verfahrenstechnischen Besonderheiten auf, sondern erfolgt beispielsweise mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von vorzugsweise 50 bis 200 °C.

Beispiele geeigneter Copolymerisationsverfahren werden in den Patentanmeldungen DE 197 09 465 A1, DE 197 09 476 A1, DE 28 48 906 A1, DE 195 24 182 A1, DE 198 28 742 A1, DE 196 28 143 A1, DE 196 28 142 A1, EP 0 554 783 A1, WO 95/27742 A1, WO 82/02387 A1 oder WO 98/02466 A1 beschrieben. Die Copolymerisation kann indes auch in Polyolen (thermisch härtbare Reaktivverdünner) als Reaktionsmedium durchgeführt werden, wie dies beispielsweise in der deutschen Patentanmeldung DE 198 50 243 A1 beschrieben wird.

Beispiele geeigneter radikalischer Initiatoren sind Dialkylperoxide, wie Di- tert.-Butylperoxid oder Dicumylperoxid, Hydroperoxide, wie Cumolhydroperoxid oder tert.-Butylhydroperoxid, Perester, wie tert.-Butylperbenzoat, tert.-Butylperpivalat, tert.-Butylper-3, 5, 5-trimethyl- hexanoat oder tert.-Butylper-2-ethylhexanoat, Peroxodicarbonate, Kalium-, Natrium- oder Ammoniumperoxodisulfat, Azoinitiatoren, beispielsweise Azodinitrile wie Azobisisobutyronitril, C-C-spaltende Initiatoren wie Benzpinakolsilylether, oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A1, Seite 3, Zeile 49, bis Seite 4, Zeile 6, beschrieben. Des Weiteren können Thiocarbonylthio-Verbindungen oder Mercaptane wie Dodecylmercaptan als Kettenübertragungsmittel oder Molekulargewichtsregler verwendet werden.

Zusätzlich können in der Klarlackbeschichtungsmittelzusammensetzung von den Verbindungen der OH-funktionellen (Meth)Acrylat(co)polymerisat-Komponente (A) verschiedene, weitere organisch-monomere, -oligomere und -polymere, vornehmlich -polymere Verbindungen als Bindemittel enthalten sein. Unter Bindemitteln sind die dem Fachmann auf dem Gebiet geläufigen Verbindungen zu verstehen, die neben den weiter unten beschriebenen Vernetzungsmitteln in Beschichtungszusammensetzungen hauptsächlich für die Filmbildung verantwortlich sind. Hierzu gehören demnach auch die weiter oben beschriebenen (Meth)Acrylat(co)polymerisate (A1) und (A2). Als oligomere Verbindungen werden bekanntermaßen solche Bestandteile bezeichnet, in denen nur wenige, das heißt beispielsweise mindestens 2 bis 10 Monomereinheiten miteinander verknüpft sind. Polymere Verbindungen sind demnach solche, in denen beispielsweise mehr als 10 Monomereinheiten verknüpft sind und wobei, abhängig von den molaren Massen der eingesetzten Monomere, das zahlenmittlere Molekulargewichte häufig bei beispielsweise über 1000 g/mol liegt. Wie dem Fachmann bekannt ist, handelt es sich bei solchen polymeren Verbindungen beispielsweise um statistisch, alternierend und/oder blockartig aufgebaute, lineare, verzweigte und/oder kammartig aufgebauten (Co)polymerisate mindestens einer monomeren Verbindung. In Frage kommen letztlich, abgesehen von den weiter oben beschriebenen (Meth)Acrylat(co)polymerisaten (A1) und (A2) und den weiter unten beschriebenen Vernetzungsmitteln, alle organischen monomeren, oligomeren und polymeren, vornehmlich polymeren Verbindungen, die dem Fachmann in diesem Zusammenhang bekannt sind.

Enthalten sein können insbesondere weitere statistisch, alternierend und blockartig aufgebaute, lineare, verzweigte und/oder kammartig aufgebaute (Co)polymerisate von ethylenisch ungesättigten Monomeren. Neben den genannten OH-funktionellen (Meth)Acrylat(co)polymerisaten (A1) und (A2) können beispielsweise auch weitere, von den (Meth)Acrylat(co)polymerisaten (A1) und (A2) verschiedene (Meth)Acrylat(co)polymerisate mit Glasübergangstemperaturen T_{g} und/oder OH-Zahlen, die von den weiter oben beschriebenen Glasübergangstemperaturen und OH-Zahlen der (Meth)Acrylat(co)polymerisate (A1) und (A2) unterschiedlich sind, in den Klarlackbeschichtungsmittelzusammensetzungen enthalten sein.

Beispiele weiterer, geeigneter (Co)polymerisate von ethylenisch ungesättigten Monomeren sind neben den bereits ausführlich beschriebenen (Meth)acrylat(co)polymerisaten auch partiell verseifte Polyvinylester.

Enthalten sein können auch Polyadditionsharze und/oder Polykondensationsharze als Bindemittel. Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane.

Bevorzugt ist in der erfindungsgemäßen Klarlackbeschichtungsmittelzusammensetzung mindestens ein Polyester enthalten, insbesondere genau ein Polyester. Ein Polyester ist bekanntermaßen eine polymere organische Verbindung, die organische Polyole und mehrwertige organische Carbonsäuren enthält oder aus solchen Komponenten besteht. Die Polyole und Polycarbonsäuren werden dabei durch Veresterung, das heißt also durch Kondensationsreaktionen, miteinander verknüpft. Entsprechend werden die Polyester der Gruppe der Polykondensationsharze zugeordnet. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Ganz allgemein können bei der Herstellung von Polyestern Polycarbonsäuren und Polyole, beispielsweise aliphatische Polycarbonsäuren und aliphatische Polyole zum Einsatz kommen. Ebenfalls zum Einsatz kommen können aromatische Polycarbonsäuren und aromatische Polyole oder auch Polycarbonsäuren und Polyole, die neben den ihre Verbindungsklasse bezeichnenden funktionellen Gruppen sowohl (lineare, verzweigte und/oder cyclische) aliphatische als auch aromatische Gruppen aufweisen. Ebenso möglich ist der Einsatz von linearen, verzweigten und/oder cyclischen aliphatischen und/oder aromatischen Hydroxycarbonsäuren sowie Lactonen, das heißt also Hydroxycarbonsäuren und Lactonen, die neben den ihre Verbindungsklasse bezeichnenden funktionellen Gruppen lineare, verzweigte und/oder cyclische aliphatische und/oder aromatische Gruppen aufweisen.

Geeignete Diole sind beispielsweise Alkylenglykole, wie Ethylenglykol, Propylenglykol, Butylenglykol, Butandiol-1,4, Hexandiol-1,6, Neopentylglykol, und andere Diole, wie 1,4-Dimethylolcyclohexan oder 2-Butyl-2-Ethyl-1,3-Propandiol. Geeignete höherfunktionelle Alkohole (OH-Funktionalität größer 2) sind beispielsweise Trimethylolpropan, Glycerin und Pentaerythrit.

Die Säurekomponente eines Polyesters umfasst in der Regel Dicarbonsäuren mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Hexahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle der Säuren können auch ihre Anhydride, soweit diese existieren, zur Herstellung der Polyester erwendet werden. Bevorzugt werden jedenfalls Isophthalsäure und/oder Hexahydrophthalsäure sowie das Anhydrid der Hexahydrophthalsäure zur Herstellung der Polyester eingesetzt. Ganz besonders bevorzugt ist der Einsatz von Hexahydrophthalsäure und des Anhydrids der Hexahydrophthalsäure. Die Polyester umfassen also bevorzugt die genannten bevorzugten Dicarbonsäuren als Monomereinheiten. Es können auch höherfunktionelle Carbonsäuren mit 3 oder mehr Carboxylgruppen (beziehungsweise die entsprechenden Anhydride), beispielsweise Trimellithsäureanhydrid eingesetzt werden. Häufig werden auch anteilig Monocarbonsäuren, wie beispielsweise ungesättigte Fettsäuren, verwendet.

Einsetzbare Hydroxcarbonsäuren sind beispielsweise Hydroxycapronsäure, Hydroxybuttersäure, Hydroxydecansäure und/oder 12-Hydroxystearinsäure. Einsetzbare Lactone sind beispielsweise die an sich bekannten beta-, gamma-, delta- und epsilon-Lactone, insbesondere epsilon-Ca0prolacton.

Neben den oben beschriebenen monomeren Verbindungen können beispielsweise auch bereits polymere Ausgangsprodukte eingesetzt werden, beispielsweise als Diole die an sich bekannten Polyesterdiole, die durch Umsetzung eines Lactons mit einem zweiwertigen Alkohol erhalten werden.

Der mindestens eine Polyester ist insbesondere OH-funktionell. Die erfindungsgemäße Klarlackbeschichtungszusammensetzung enthält demzufolge mindestens einen, bevorzugt genau einen, Polyester (E) mit einer OH-Zahl von 80 - 280 mg KOH/g, vorzugsweise 100 - 260 mg KOH/g, ganz besonders bevorzugt von 175 - 200 mg KOH/g, auf. Der Polyester (E) besitzt also bevorzugt eine hohe Menge von OH-Gruppen.

Der mindestens eine Polyester (E) besitzt eine Glasübergangstemperatur T_{g} von - 80°C bis 20°C, vorzugsweise -60°C bis 10°C, ganz besonders bevorzugt von -40°C, bis -10°C.

Als Polyester (E) können sowohl übliche im Handel erhältliche als auch selbst hergestellte Polyester verwendet werden. Als handelsübliche Polyester sind beispielsweise die Polyester der Produktreihe Setal, beispielsweise Setal 166 SS-80 (Nuplex Resins) zu nennen.

Die Herstellung von Polyestern weist keine verfahrenstechnischen Besonderheiten auf und erfolgt in der Regel über die an sich üblichen und bekannten Polymerisationsverfahren, insbesondere Polykondensationsverfahren, in Masse, Lösung, Emulsion, Miniemulsion oder Mikroemulsion in Rührkesseln, Autoklaven, Rohrreaktoren, Schlaufenreaktoren oder Taylorreaktoren bei Temperaturen von vorzugsweise 50 bis 300 °C, wobei gegebenenfalls die hierfür typischen Katalysatoren zum Einsatz kommen und/oder die für Kondensationsreaktionen typischerweise zum Einsatz kommende Wasserabscheider verwendet werden.

Der Anteil der von den Verbindungen der OH-funktionellen (Meth)Acrylat(co)polymerisat-Komponente (A) verschiedenen, weiteren organisch-monomeren, -oligomeren und -polymeren, vornehmlich -polymeren Verbindungen als Bindemittel, das heißt also insbesondere des mindestens einen Polyesters, beträgt vorzugsweise maximal 50 Gew.-%, bezogen auf die Masse des nicht-flüchtigen Anteils der OH-funktionellen (Meth)Acrylat(co)polymerisat-Komponente (A).

Die Polyester (E) ist in einer Menge von 10 - 50 Gew.-%, insbesondere 20 - 45 Gew.-%, ganz besonders bevorzugt 25 - 40 Gew.-%, jeweils bezogen auf die Masse des nicht-flüchtigen Anteils der OH-funktionellen (Meth)Acrylat(co)polymerisat-Komponente (A), enthalten.

Bekanntermaßen können die beschriebenen organisch-monomeren, -oligomeren und -polymeren, vornehmlich -polymeren Verbindungen als Bindemittel beispielsweise thermisch und/oder mit aktinischer Strahlung gehärtet werden. Sie können zudem selbstvernetzend und/oder fremdvernetzend sein, das heißt beide für eine bestimmte Vernetzungsreaktion notwendigen funktionellen Gruppen sind in der organischen Verbindung als Bindemittel selbst enthalten und/oder sie enthalten nur eine der beiden notwendigen funktionellen Gruppen für eine bestimmte Vernetzungsreaktion und vernetzen unter Verwendung von Vernetzungsmitteln, die die komplementären funktionellen Gruppen enthalten und weiter unten beschrieben werden.

Für eine ausführliche Beschreibung dieser dem Fachmann geläufigen Härtungsprozesse wird auf Römpp Lexikon Lacke und Druckfarben, Georg Thieme Verlag, Stuttgart, New York, 1998, Seite 274 - 276, sowie Seite 542 - 544 verwiesen.

Wie bereits angemerkt, sind die (Meth)Acrylat(co)polymerisate (A1) und (A2) OH-funktionell, enthalten also OH-Gruppen. Wie dem Fachmann bekannt ist, ist es möglich, über OH-Gruppen als funktionelle Gruppen in einem Bindemittel Vernetzungsreaktionen zu bewirken. Im Rahmen der vorliegenden Erfindung werden die OH-Gruppen der (Meth)Acrylat(co)polymerisate (A1) und (A2) genutzt, um mit komplementären funktionellen Gruppen von Vernetzungsmitteln die dreidimensionale Vernetzung, das heißt die Härtung, der erfindungsgemäßen Klarlackbeschichtungszusammensetzung zu bewirken. Entsprechend sind die (Meth)Acrylat(co)polymerisate (A1) und (A2) hinsichtlich Ihrer vorhandenen OH-Gruppen hauptsächlich als fremdvernetzend zu verstehen und die erfindungsgemäße Klarlackbeschichtungszusammensetzung enthält eine Vernetzungskomponente (B), enthaltend mindestens ein Vernetzungsmittel mit gegenüber OH-Gruppen reaktiven funktionellen Gruppen.

### (B) Vernetzerkomponente

Die Klarlackbeschichtungszusammensetzung enthält eine Vernetzerkomponente (B). Als Vernetzerkomponente (B) ist im Rahmen der Erfindung die Summe aller enthaltenden Vernetzungsmittel gemeint, wobei mit Vernetzungsmittel insbesondere alle organisch-monomeren, -oligomeren und -polymeren Verbindungen gemeint sind, die mit funktionellen Gruppen der oben genannten Bindemittel Vernetzungsreaktionen eingehen können, das heißt also hierzu komplementäre funktionelle Gruppen aufweisen.

Es ist erfindungswesentlich, dass die Vernetzerkomponente (B) mindestens ein Vernetzungsmittel mit gegenüber OH-Gruppen reaktiven funktionellen Gruppen enthält. Als solche Vernetzungsmittel kommen insbesondere unblockierte, partiell blockierte und/oder blockierte Polyisocyanate sowie Aminoplastharze zum Einsatz. Ganz besonders bevorzugt ist die Verwendung von unblockierten Polyisocyanaten. Im Rahmen der Erfindung werden unter Polyisocyanaten als Vernetzungsmittel organische Verbindungen verstanden, die mindestens zwei Isocyanatgruppen pro Molekül enthalten. Im Prinzip können alle mindestens zwei Isocyanatgruppen pro Molekül enthaltende organischen Verbindungen eingesetzt werden. Es können auch isocyanatgruppenhaltige Reaktionsprodukte aus beispielsweise Polyolen und Polyaminen und Polyisocyanaten eingesetzt werden.

Einsetzbar sind auch aliphatische oder cycloaliphatische Polyisocyanate, vorzugsweise Diisocyanate, ganz besonders bevorzugt aliphatische Diisocyanate, insbesondere aber Hexamethylendiisocyanat, dimerisiertes und/oder trimerisiertes Hexamethylendiisocyanat.

Weitere- Beispiele geeignetes- Polyisocyanate sind Isophorondiisocyanat, 2-Isocyanatopropylcyclohexylisocyanat, Dicyclohexylmethan-2,4'-diisocyanat oder Dicyclohexylmethan-4,4'-diisocyanat, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyloktan, 1,7-Diisocyanato-4-isocyanatomethyl-heptan oder 1-Isocyanato-2-(3- isocyanatopropyl)cyclohexan oder Mischungen aus diesen Polyisocyanaten.

Ebenfalls zu nennen sind beispielsweise Tetramethylen-1,4-diisocyanat, Cyclohexyl-1,4-diisocyanat, 1,5-Dimethyl-2,4-di(isocyanatomethyl)-benzol, 1,5-Dimethyl-2,4-di(isocyanatoethyl)-benzol, 1,3,5-Trimethyl-2,4-di(isocyanatomethyl)-benzol, 1,3,5-Triethyl-2,4-di(isocyanatomethyl)-benzol, Dicyclohexyldimethylmethan-4,4'-diisocyanat, 2,4-Toluylendiisocyanat, 2,6-Toluylendiisocyanat, Diphenylmethan-4,4'-diisocyanat.

In einer ganz besonders bevorzugten Ausführungsform wird das Trimere des Hexamethylen-1,6-diisocyanats als Vernetzungsmittel verwendet; dieses ist beispielsweise erhältlich als Handelsprodukt unter dem Namen Desmodur N 3390 (Bayer MaterialScience) oder Basonat HI190 (BASF SE).

Weitere Beispiele geeigneter Polyisocyanate sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 100 bis 2000 mPa.s (bei 23 °C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispielsweise geeignet sind auch die isocyanatgruppenhaltigen Polyurethanpräpolymere, die durch Reaktion von Polyolen mit einem Überschuss an Polyisocyanaten hergestellt werden können und die bevorzugt niederviskos sind. Weitere Beispiele geeigneter Polyisocyanate sind Isocyanurat-, Biuret-, Allophanat-, Iminooxadiazindon-, Urethan-, Harnstoff und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z. B. Trimethylolpropan und Glycerin, erhalten.

Weitere Beispiele für geeignete Isocyanate sind in "Methoden der organischen Chemie", Houben-Weyl, Band 14/2, 4, Auflage, Georg Thieme Verlag, Stuttgart 1963, Seite 61 bis 70, W. Siefken, Liebigs Ann. Chem. 562, 75 bis 136, der europäischen Patentschrift EP- A-101 832 oder den US-Patentschriften US-PS-3,290,350, UP-PS-4,130,577 und US-PS- 4,439,616 beschrieben.

Bei den oben beschriebenen Polyisocyanaten handelt es sich um Vernetzungsmittel, die in freier Form vorliegen, das heißt also unblockiert sind. Diese freien Polyisocyanate werden in der Regel, wie dem Fachmann bekannt ist, in Mehrkomponentenbeschichtungssystemen, insbesondere in Zweikomponentenbeschichtungssystemen, eingesetzt. Für die vorliegende Erfindung bedeutet dies, dass die Komponente (A) und die Vernetzerkomponente (B) der erfindungsgemäßen Klarlackbeschichtungszusammensetzung im Falle einer Zweikomponenten-Klarlackbeschichtungszusammensetzung getrennt voneinander gelagert werden und erst direkt vor der Applikation der Klarlackbeschichtungszusammensetzung zusammengegeben werden. Dies geschieht, um eine vorzeitige Vernetzung der Bindemittel, insbesondere der OH-Gruppen der (Meth)Acrylat(co)polymerisate (A1) und (A2) und der freien Polyisocyanat-Vernetzer zu vermeiden.

Wie oben angegeben, ist aber ebenfalls der Einsatz von Polyisocyanaten, die blockiert sind, möglich. Diese blockierten Polyisocyanate werden als Vernetzungsmittel im Rahmen der Erfindung bei Einkomponenten-Klarlackbeschichtungszusammensetzungen eingesetzt, das heißt also, die OH-funktionelle (Meth)Acrylat(co)polymerisat-Komponente (A) und die Vernetzerkomponente (B) können miteinander gemischt gelagert werden und werden nicht erst kurz vor der Applikation miteinander vermischt. Im Gegensatz zu den freien Isocyanaten können die blockierten Polyisocyanatvernetzer erst bei höheren Temperaturen mit den funktionellen Gruppen der Bindemittel, insbesondere den OH-Gruppen der (Meth)Acrylat(co)polymerisate (A1) und (A2), reagieren, um ein dreidimensionales Netzwerk aufzubauen und damit zur Aushärtung der Beschichtungszusammensetzung führen. Selbstverständlich können solche blockierten Polyisocyanat-Vernetzungsmittel auch in den Mehrkomponentensystemen, insbesondere Zweikomponentensystemen, mit verwendet werden.

Bekanntermaßen ist der Grund dafür, dass die blockierten Vernetzungsmittel erst bei erhöhten Temperaturen (ca. > 80°C - 100°C) die Härtung der Beschichtungszusammensetzung bewirken, dass erst bei diesen Temperaturen die Blockierungsmittel von den Isocyanatfunktionen abgespalten werden, so dass diese dann mit den komplementären Gruppen der Bindemittel, insbesondere der OH-Gruppen der (Meth)Acrylat(co)polymerisate (A1) und (A2), reagieren können.

Typische Blockierungsmittel sind beispielsweise Phenole, Alkohole, Oxime, Pyrazole, Amine und CH-acide Verbindungen wie Malonsäurediethylester. Die Blockierungsreaktion wird typischerweise durch Umsetzung der freien NCO-Gruppen mit den genannten Blockierungsmitteln in Anwesenheit von z. B. Katalysatoren wie Dibutylzinndilaurat oder Zinn(II)bis(2-ethylhexanoat) durchgeführt. Die Blockierungsmittel und die entsprechenden Umsetzungsreaktionen sind dem Fachmann bekannt und sind beispielsweise ausführlich beschrieben in der US-Patentschrift US-A- 4,444,954. Bevorzugt sind als Blockierungsmittel Caprolactam, Butanonoxim, Acetonoxim, Malonsäurediethylester, Dimethylpyrazol oder Phenol, einzusetzen.

Des Weiteren können im Rahmen der Erfindung vorteilhaft Aminoplastharze als Vernetzungsmittel eingesetzt werden. Insbesondere kommen die üblichen und bekannten Aminoplastharze in Betracht, wie z. B. Melamin-, Benzoguanamin- und Harnstoff-Formaldehydharze. Bevorzugt werden Melamin-Formaldehydharze eingesetzt. Typischerweise werden diese in mit niederen Alkoholen, meistens Methanol und/oder Butanol, veretherter Form verwendet. Ein geeignetes Aminoplastharz ist beispielsweise Hexamethoxymethylmelamin. Kondensationsprodukte von anderen Aminen und Amiden können jedoch ebenfalls verwendet werden, z. B. Aldehydkondensate von Triazinen, Diazinen, Triazolen, Guanidinen, Guaniminen und alkyl- und arylsubstituierten Derivaten solcher Verbindungen, einschließlich alkyl- und arylsubstituierte Melamine. Einige Beispiele solcher Verbindungen sind N,N'-Dimethylharnstoff, Benzoharnstoff, Dicyandiamid, Formaguanamin, Acetoguanamin, Ammelin, 2-Chlor-4,6-diamino-1,3,5-triazin, 6-Methyl-2,4-diamino-1,3,5-triazin, 3,5-Diaminotriazol, Triaminopyrimidin, 2-Mercapto-4,6-diaminopyrimidin, 3,4,6-Tris(ethylamino)-1,3,5-triazin, Tris(alkoxycarbonylamino)-triazin und Ähnliche. Selbstverständlich sind neben den Kondensationsprodukten mit Formaldehyd auch solche mit anderen Aldehyden verwendbar.

Es kommen auch die üblichen und bekannten Aminoplastharze in Betracht, deren Methylol- und/oder Methoxymethylgruppenteilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207 , beschrieben.

Im Rahmen der Erfindung geeignete Aminoplastharze sind beispielsweise unter dem Warenzeichen Cymel, Luwipal, Maprenal, Resimene und Beetle auf dem Markt erhältlich.

Im Fall der bevorzugten isocyanatgruppenhaltigen Vernetzungsmittel wird das mindestens eine Vernetzungsmittel vorzugsweise in einer solchen Menge eingesetzt, dass ein Überschuss der Gesamtmenge von reaktiven NCO-Gruppen des eingesetzten Vernetzungsmittels im Vergleich zu der Gesamtmenge der Hydroxylgruppen der weiter oben beschriebenen, als Bindemittel eingesetzten Verbindungen, insbesondere also der (Meth)Acrylat(co)polymerisate (A1) und (A2), vorliegt. Besonders bevorzugt liegt das Verhältnis von den Hydroxylgruppen der als Bindemittel eingesetzten Verbindungen zu den NCO-Gruppen des mindestens einen Vernetzungsmittels zwischen 1 : 1 bis 1 : 1,5, ganz besonders bevorzugt zwischen 1 : 1,05 bis 1 : 1,25, insbesondere zwischen 1 : 1,05 bis 1 : 1,15.

Bevorzugt ist die Vernetzungskomponente, insbesondere die Polyisocyanate und/oder Aminoplastharze, besonders bevorzugt die unblockierte Polyisocyanate, in einer Menge von 30 - 80 Gew.-%, insbesondere 40 - 70 Gew.-%, ganz besonders bevorzugt 50 - 65 Gew.-%, jeweils bezogen auf die Masse des nicht-flüchtigen Anteils der OH-funktionellen (Meth)Acrylat(co)polymerisat-Komponente (A), enthalten.

Dabei ist es bevorzugt, wenn der Anteil der Vernetzerkomponente (B) an der gesamten Beschichtungsmittelzusammensetzung zwischen 10 bis 50 Gew.-%, besonders bevorzugt zwischen 20 bis 40 Gew.-%, jeweils bezogen auf den nichtflüchtigen Anteil der gesamten Klarlackbeschichtungszusammensetzung, liegt.

### (C) Polyamide

Die erfindungsgemäße Klarlackbeschichtungszusammensetzung enthält mindestens ein Polyamid als Rheologiehilfsmittel. Unter Polyamiden werden organische Verbindungen verstanden, die mindestens zwei Amidstrukturen im Molekül enthalten. Derartige Verbindungen können beispielsweise hergestellt werden durch Umsetzung von Polycarbonsäuren mit Polyaminen und/oder Monoaminen oder durch Umsetzung von Polyaminen mit Monocarbonsäuren.

Bevorzugt handelt es sich bei den Polyamiden um synthetische Polyamid-Wachse. Unter synthetischen Wachsen versteht der Fachmann gängigerweise synthetische organische Produkte, die bestimmte physikalische Eigenschaften aufweisen. Zu diesen zählen insbesondere, dass sie bis zu 20°C knetbar, fest bis brüchig hart, grob- bis feinkristallin, jedoch nicht glasartig sind. Sie schmelzen in der Regel erst oberhalb von 40°C ohne Zersetzung und gehen oberhalb ihres Schmelzpunktes in den schmelzflüssigen, niedrigviskosen Zustand über. Die Konsistenz ist stark temperaturabhängig.

Polyamide, die die beschriebenen wachsartigen Eigenschaften aufweisen und damit als Polyamid-Wachse zu bezeichnen sind, sind beispielsweise solche, die durch Umsetzung von Polyaminen mit Fettsäuren, insbesondere Fettsäuren, die 16 bis 20 C-Atome pro Molekül umfassen, erhalten werden. Als Polyamine zur Herstellung solcher Polyamide beziehungsweise Polyamid-Wachse kommen beispielsweise monomere organische Verbindungen mit mehr als einer Amingruppe in Betracht (monomere Polyamine), beispielsweise 1,6-Hexamethylendiamin. Solche synthetischen Polyamid-Wachse werden demnach bevorzugt in der erfindungsgemäßen Klarlackbeschichtungszusammensetzung eingesetzt. Besonders bevorzugte Polyamide bzw. synthetische Polyamid-Wachse als Rheologiehilfsmittel sind Umsetzungsprodukte aus 1,6-Hexamethylendiamin mit Fettsäuren und/oder Hydroxy-Fettsäuren mit 16 bis 20 C-Atomen pro Molekül, insbesondere HydroxyFettsäuren, bevorzugt 12-Hydroxystearinsäure.

Insbesondere werden die bevorzugten Polyamid-Wachse in Form von Partikeln eingesetzt. Typische mittlere Teilchengrößen solcher Polyamid-Wachs-Partikel können beispielsweise unterhalb 100 Mikrometer, besonders bevorzugt unterhalb 80 Mikrometer, ganz besonders bevorzugt unterhalb 60 Mikrometer und insbesondere unterhalb 50 Mikrometer liegen. Speziell ist der Bereich von 5 bis 40 Mikrometer besonders vorteilhaft. Die Bestimmung der mittleren Teilchengröße erfolgt dabei durch die bekannte Laserbeugungsmethode, insbesondere gemäß DIN ISO 13320:2009 (Bestimmung der mittleren Teilchengröße, das heißt des d₅₀-Werts).

Die erfindungsgemäß einzusetzenden synthetischen Polyamide, insbesondere die bevorzugten Polyamid-Wachs-Partikel, können als solche zu den erfindungsgemäßen Klarlackbeschichtungszusammensetzungen hinzugegeben werden. Es ist indes von Vorteil, sie in der Form einer Dispersion in typischen organischen Lösemitteln (C), insbesondere Alkohole und/oder Xylol, zuzusetzen. Der nicht-flüchtige Anteil dieser Dispersion kann breit variieren. Vorzugsweise enthalten sie das erfindungsgemäß zu verwendende Polyamid (C), insbesondere die Polyamid-Wachs-Partikel, in einer Menge von 5 bis 40, bevorzugt 10 bis 30 und insbesondere 15 bis 25 Gew. -%, jeweils bezogen auf die Gesamtmenge der Dispersion. Solche Dispersionen von unterschiedlichen Polyamid-Wachs-Partikeln sind beispielsweise im Handel unter dem Handelsnamen Disparlon (King Industries, USA, Kusumoto, Japan oder Erbslöh, Deutschland) erhältlich.

Insbesondere bevorzugt ist im Rahmen der vorliegenden Erfindung der Einsatz von Polyamid-Wachs-Partikeln auf Basis von Hydroxystearinsäure und 1,6-Hexamethylendiamin in Form einer wie oben beschriebenen Dispersion in organischen Lösemitteln. Ein entsprechendes Handelsprodukt ist unter dem Namen Disparlon 6900-20X (Erbslöh) erhältlich.

Ganz besonders bevorzugt ist es, die Polyamide (C), insbesondere die Polyamid-Wachse, in der erfindungsgemäßen Klarlackbeschichtungszusammensetzung in Form einer Paste einzusetzen. Die Paste enthält neben dem Polyamid zusätzlich ein wie oben beschriebenes (Meth)Acrylat(co)polymerisat, beispielsweise ein (Meth)Acrylat(co)polymerisat (A1) und/oder (A2), sowie mindestens ein typisches organisches Lösemittel, beispielsweise Alkohole und/oder aromatische Lösemittel wie Xylol und/oder Solvent Naphtha. Vorzugsweise enthält die Paste 20 bis 60, bevorzugt 25 bis 55 und insbesondere 30 bis 50 Gew. -%, eines wie oben beschriebenes (Meth)Acrylat(co)polymerisats, 3 bis 9, bevorzugt 4 bis 8 und insbesondere 5 bis 7 Gew. -% des Polyamids, jeweils bezogen auf die Gesamtmenge der Paste, sowie mindestens ein typisches organisches Lösemittel.

Solche Pasten können ohne besonderen methodischen Aufwand durch Vermischen und Homogenisieren der Bestandteile mit Hilfe üblicher und bekannter Mischverfahren und Vorrichtungen hergestellt werden. Insbesondere kann eine wie oben beschriebene Dispersion von Polyamid-Wachs-Partikeln (beispielsweise Disparlon 6900-20X, Erbslöh) mit einem (Meth)Acrylat(co)polymerisat in solchen Anteilen vermischt werden, das die oben genannten Anteile der einzelnen Bestandteile an der Paste resultieren.

Die erfindungsgemäße Klarlackbeschichtungszusammensetzung enthält erfindungsgemäß 0,02 bis 1,2 Gew.-%, bevorzugt 0,1 bis 1 Gew.-%, bezogen auf die Masse des nicht-flüchtigen Anteils der OH-funktionellen (Meth)Acrylat(co)polymerisat-Komponente (A), mindestens eines Polyamids.

### (D) Harnstoffverbindung als Additionsprodukt eines Polyisocyanats und eines Monoamins

Die erfindungsgemäße Klarlackbeschichtungszusammensetzung enthält mindestens eine Harnstoffverbindung, die ein Additionsprodukt eines Polyisocyanats und Methoxypropylamin ist, als weiteres Rheologiehilfsmittel.

Als Polyisocyanate können im Prinzip alle mindestens zwei Isocyanatgruppen pro Molekül enthaltende organischen Verbindungen eingesetzt werden, z. B. die oben beschriebenen Polyisocyanate. Es können auch isocyanatgruppenhaltige Reaktionsprodukte aus beispielsweise Polyolen und Polyaminen und Polyisocyanaten eingesetzt werden. Vorzugsweise werden Diisocyanate, ganz besonders bevorzugt aliphatische Diisocyanate, insbesondere Hexamethylendiisocyanat eingesetzt. Als Beispiel für einsetzbare Polyisocyanate werden genannt: Tetramethylen-1,4-diisocyanat, Hexamethylen-1,6-diisocyanat, Cyclohexyl-1,4-diisocyanat, Dicyclohexylmethan-4,4-diisocyanat, 1,5-Dimethyl-(2,4-omega-diisocyanato-methyl)-benzol, 1,5-Dimethyl-(2,4-omega-diisocyanato-ethyl)-benzol, 1,3,5-Trimethyl-(2,4-omega-diisocyanato-methyl)-benzol, 1,3,5-Triethyl-(2,4-omega-diisocyanato-methyl)-benzol, das Trimere des Hexamethylen-1,6-diisocyanats, Isophorondiisocyanat, 2,4-Toluoldiisocyanat, 2,6-Toluoldiisocyanat, -diisocyanat.

Die Harnstoffverbindung wird vorzugsweise in Form einer Paste gemischt mit mindestens einem typischen wie weiter unten beschriebenen organischen Lösemittel sowie mindestens einem Polyester und/oder einem als (Meth)Acrylat(co)polymerisat, bevorzugt einem Polyester (E), in der erfindungsgemäßen Klarlackbeschichtungszusammensetzung eingesetzt. So kann die Herstellung der Harnstoffverbindung beispielsweise direkt in Gegenwart eines Polyesters, das heißt also insbesondere eines wie oben gekennzeichneten Polyesters (E), erfolgen. Dabei wird beispielsweise so vorgegangen, dass das Methoxypropylamin zu einer Lösung eines Polyesters in einem organischen Lösemittel beziehungsweise in einem Gemisch aus organischen Lösemitteln gegeben wird und dann das Polyisocyanat zugegeben wird. Die in Frage kommenden organischen Lösemittel sind weiter unten beschrieben und werden insbesondere so ausgewählt, dass sie keine störenden Wechselwirkungen mit den bei der Reaktion vorliegenden Bestandteilen, das heißt also mit dem Methoxypropylamin, dem mindestens einen Polyisocyanat und dem mindestens einen Polyester, eingehen. Dabei kann beispielsweise auch eine Verknüpfung des Polyisocyanats beziehungsweise der Harnstoffverbindung, sofern sie noch freie Isocyanatgruppen enthält, mit dem Polyester auftreten. Dies ist beispielsweise dann der Fall, wenn der Polyester OH-Gruppen enthält. Die Paste enthält dann einen Polyester, welcher mit der erfindungsgemäß einzusetzenden Harnstoffverbindung modifiziert ist. Die Harnstoffverbindung wird also vorzugsweise zumindest anteilig in Form eines Additionsprodukts aus Polyester und Harnstoffverbindung eingesetzt. Der weiter unten beschriebene Anteil der Harnstoffverbindung an der Klarlackbeschichtungszusammensetzung bezieht sich auch in diesem Fall ausschließlich auf die Harnstoffverbindung und nicht auf das Produkt aus Harnstoffverbindung und Polyester.

Die so erhaltene Paste, das heißt Mischung beziehungsweise Verbindung aus harnstoffgruppenhaltigem Rheologiehilfsmittel und Polyester mit organischen Lösemitteln wird dann in der erfindungsgemäßen lösemittelhaltigen Klarlackbeschichtungszusammensetzung eingesetzt.

Harnstoffverbindungen als Additionsprodukt eines Polyisocyanats und Methoxypropylamin als Mischungen mit Polyestern sind beispielsweise auch unter dem Handelsnamen Setal, beispielsweise Setal 82166 SS-64 oder Setal 81462 SS-55 (Nuplex Resins) erhältlich und können ohne weiteres in der erfindungsgemäßen Klarlackbeschichtungszusammensetzung eingesetzt werden.

Die erfindungsgemäße Klarlackbeschichtungszusammensetzung enthält erfindungsgemäß 0,04 bis 2,9 Gew.-%, vorzugsweise 0,3 bis 1,5 Gew.-%. bezogen auf die Masse des nicht-flüchtigen Anteils der OH-funktionellen (Meth)Acrylat(co)polymerisat-Komponente (A), mindestens einer Harnstoffverbindung, die ein Additionsprodukt eines Polyisocyanats und Methoxypropylamin ist.

Die erfindungsgemäße Klarlackbeschichtungszusammensetzung enthält zudem mindestens ein organisches Lösemittel. Als organische Lösemittel sind insbesondere solche geeignet, die in der Klarlackbeschichtungszusammensetzung chemisch inert gegenüber den Verbindungen (A) und (B) sind und die auch bei der Härtung der aus der erfindungsgemäßen Klarlackbeschichtungszusammensetzung hergestellten Klarlackierung nicht mit (A) und (B) reagieren.

Es werden organische Lösemittel eingesetzt, die die Vernetzung der erfindungsgemäßen Klarlackbeschichtungszusammensetzung nicht inhibieren und/oder mit den sonstigen Bestandteilen der erfindungsgemäßen Klarlackbeschichtungszusammensetzung chemische Reaktionen eingehen. Der Fachmann kann daher geeignete Lösemittel leicht anhand ihres bekannten Lösevermögens und ihrer Reaktivität auswählen.

Beispiele für solche Lösemittel sind aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat oder Ethylethoxypropionat, Ether oder Mischungen aus den vorgenannten Lösemitteln.

Die erfindungsgemäße Klarlackbeschichtungszusammensetzung enthält vorzugsweise 30 bis zu 70, bevorzugt 40 bis 60 Gew.-% organische Lösemittel.

Die erfindungsgemäße Klarlackbeschichtungszusammensetzung ist lösemittelhaltig. Dies bedeutet neben der oben genannten Tatsache, dass ein organisches Lösemittel enthalten ist, insbesondere, dass die Klarlackbeschichtungszusammensetzung nicht mehr als 1 Gew.-%, bevorzugt maximal 0,5 Gew.-%, insbesondere bevorzugt maximal 0,25 Gew.-%, bezogen auf die Gesamtmenge der Zusammensetzung, an Wasser enthält. Dazu ist es von Vorteil, dass die in der Klarlackbeschichtungszusammensetzung enthaltenen organischen Lösemittel oder Lösemittelgemische einen Wassergehalt von maximal 1 Gew.-%, besonders bevorzugt maximal 0,5 Gew.-%, bezogen auf das Lösemittel, aufweisen.

Darüber hinaus kann die erfindungsgemäße Klarlackbeschichtungszusammensetzung mindestens ein übliches und bekanntes Lackadditiv in wirksamen Mengen, das heißt in Mengen von vorzugsweise bis zu maximal 30 Gew.-%, besonders bevorzugt bis zu maximal 25 Gew.-% und insbesondere bis zu maximal 20 Gew.-%, jeweils bezogen auf die nichtflüchtigen Bestandteile der Klarlackbeschichtungszusammensetzung, enthalten.

Beispiele geeigneter Lackadditive sind:
- insbesondere UV-Absorber;
- insbesondere Lichtschutzmittel wie HALS-Verbindungen, Benztriazole oder Oxalanilide;
- nicht-deckende, transparente Füllstoffe, wie SiO₂-Nanoparikel, Bariumsulfat, Zinkoxid und Aerosil
- Radikalfänger;
- Slipadditive;
- Polymerisationsinhibitoren;
- Entschäumer;
- Reaktivverdünner, wie sie aus dem Stand der Technik allgemein bekannt sind,
- Netzmittel wie Siloxane, fluorhaltige Verbindungen, Carbonsäurehalbester,
- Phosphorsäureester, Polyacrylsäuren und deren Copolymere oder Polyurethane;
- Haftvermittler wie Tricyclodecandimethanol;
- filmbildende Hilfsmittel wie Cellulose-Derivate;
- und/oder Flammschutzmittel.

Neben der erfindungsgemäßen Klarlackbeschichtungszusammensetzung ist die Herstellung der erfindungsgemäßen Klarlackbeschichtungszusammensetzung weiterer Gegenstand der vorliegenden Erfindung.

Methodisch weist die Herstellung keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer gegebenenfalls unter Ausschluss von aktinischer Strahlung.

Wichtig ist im Falle der bevorzugten Zweikomponenten-Klarlackbeschichtungssystemen, das heißt also insbesondere beim Einsatz von unblockierten Polyisocyanaten als Vernetzter in der Vernetzerkomponente (B), dass die Komponente (A) und der bevorzugt vorhandene hydroxyfunktionelle Polyester getrennt von der Vernetzerkomponente (B) gelagert werden und erst direkt vor der Applikation der Klarlackbeschichtungszusammensetzung zusammengegeben und gemischt werden, um eine vorzeitige Vernetzung der Bindemittel, insbesondere der OH-Gruppen der (Meth)Acrylat(co)polymerisat (A1), (A2) und des Polyesters mit den freien Polyisocyanaten, zu vermeiden. Im Falle von Zweikomponenten-Klarlackbeschichtungssystemen, werden gängigerweise die oben angegebenen Bestandteile der erfindungsgemäßen Klarlackbeschichtungszusammensetzung, insbesondere die Rheologiehilfsmittel (C) und (D), der Polyester (E) sowie organische Lösemittel und die gegebenenfalls vorhandenen Lackadditive, mit der Komponente (A) vermischt und gegebenenfalls gelagert. Dieser Mischung wird dann die Vernetzerkomponente (B), welche in der Regel mit organischen Lösemitteln gemischt vorliegt, unmittelbar vor der Applikation der erfindungsgemäßen Klarlackbeschichtungszusammensetzung beigemischt. Unter einem Beimischen unmittelbar vor der Applikation ist im Rahmen der vorliegenden Erfindung ein Beimischen innerhalb von maximal 30 min, bevorzugt maximal 15 min, vor der Applikation zu verstehen.

Weiterer Gegenstand der vorliegenden Erfindung ist die Verwendung der erfindungsgemäßen Klarlackbeschichtungszusammensetzung. Die erfindungsgemäße Klarlackbeschichtungszusammensetzung eignet sich insbesondere zum Einsatz in der Automobillackierung zur Herstellung von Klarlackierungen auf unterschiedlichen Substraten und wird dementsprechend verwendet. Demzufolge ist auch eine Klarlackierung, die auf einem Substrat unter Verwendung der erfindungsgemäßen Klarlackbeschichtungszusammensetzung hergestellt wurde, Gegenstand der vorliegenden Erfindung.

Die Applikation der erfindungsgemäßen Klarlackbeschichtungszusammensetzung auf ein Substrat kann durch alle üblichen Applikationsmethoden, wie z. B. Spritzen, Rakeln, Streichen, Giessen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen (Pneumatische Applikationsanlagen), Airless-Spritzen, Hochrotation, elektrostatischer Sprühauftrag (ESTA), gegebenenfalls verbunden mit Heissspritzapplikation wie zum Beispiel Hot-Air-Heissspritzen.

Bevorzugt beträt die Schichtdicke im gehärteten, trockenen Zustand zwischen 20 und 70 Mikrometer.

Nach der Applikation und vor der Aushärtung der erfindungsgemäßen Klarlackbeschichtungszusammensetzung kann eine gewisse Ruhezeit beziehungsweise Abdunstzeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Nach der Applikation und gegebenenfalls der Abdunstzeit der erfindungsgemäßen Klackbeschichtungszusammensetzung auf einem Substrat, erfolgt die Härtung, wodurch eine Klarlackierung gebildet wird.

Die thermische Härtung der erfindungsgemäßen Klarlackbeschichtungszusammensetzung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere Härtungsmethode ist die Härtung mit nahem Infrarot (NIR-Strahlung). Insbesondere vorteilhaft ist die thermische Härtung der erfindungsgemäßen Klarlackbeschichtungszusammensetzung. Die thermische Härtung wird in der Regel bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h. Im Falle der bevorzugt eingesetzten Zweikomponenten-Klarlackbeschichtungssysteme erfolgt die thermische Härtung bevorzugt bei einer Temperatur von 20 min - 60 min bei 80° -160°C. Mit einem Metall als Substrat erfolgt die thermische Härtung bevorzugt für 20 - 40 min bei 100°C - 160°C. Mit einem Kunststoff als bevorzugtes Substrat erfolgt die thermische Härtung für 30 - 60 min bei 60 -100°C ("low-bake" - Verfahren).

Das Substrat wird entweder direkt beschichtet (einschichtige Lackierung) oder aber die Klarlackschicht wird auf schön vorhandenen, zuvor applizierten und gegebenenfalls getrockneten beziehungsweise gehärteten Lackschichten ausgebildet wird, wobei dann eine Mehrschichtlackierung resultiert. Das Substrat ist bevorzugt ein metallisches Substrat oder ein Kunststoffsubstrat, beispielsweise solche wie sie zur Herstellung von Anbauteilen im Automobilbau verwendet werden, wie z. B. PP/EPDM, Polyamid, ABS. Ganz besonders bevorzugt sind Kunststoffsubstrate.

Im Falle von Metallsubstraten wird die Klarlackierung vorteilhaft im Rahmen einer Mehrschichtlackierung, enthaltend eine Elektrotauchlackierung, eine Füllerlackierung, eine Basislackierung und die erfindungsgemäße Klarlackierung, eingesetzt. Im Falle von Kunststoffsubstraten werden entweder einschichtige Lackierungen oder ebenfalls Mehrschichtlackierungen aufgebaut. In letzterem Fall werden die üblichen, in der Kunststofflackierung einsetzbaren Füller-, Einschichtdecklack-, Basislack- und Klarlackbeschichtungszusammensetzungen, deren Auswahl und Einsatz dem Fachmann bekannt sind, eingesetzt.

Beispiele:

### Herstellungsbeispiel 1. Synthese eines (Meth)Acrylat(co)polymerisats

Es wird eine Vormischung erstellt bestehend aus einer Initiatorlösung aus 94,5 g einer Fraktion aromatischer Kohlenwasserstoffe mit einem Siedebereich von 158 - 172°C und 57,9 g Initiator Di-tert-butylperoxid. Diese Mischung wird in einen Tropftrichter überführt.
In einen 2. Tropftrichter wird eine Vormischung gegeben bestehend aus 1869,9 g Ethylhexylacrylat und 684,6 g Hydroxyethylacrylat.
In einen Laborreaktor mit einem Nutzvolumen von 4 I, ausgestattet mit einem Rührer, 2 Tropftrichtern (je einen für die Iniatiatorlösung und die Monomerenmischung), einem Stickstoffeinleitungsrohr, einem Innenthermometer und einem Rückflusskühler, werden 1022,4 g einer Fraktion aromatischer Kohlenwasserstoffe mit einem Siedebereich von 158 -172°C vorgelegt.
Das vorgelegte Lösemittel wird auf 150°C erhitzt. Nach Erreichen dieser Temperatur werden die Monomerenmischung innerhalb von 4 Stunden und die Initiatormischung innerhalb von 4 ¾ Stunden gleichmässig unter Rühren zur Vorlage zugegeben. Dabei erfolgt die erste Initiatorzugabe 15 min vor der ersten Monomerenzugabe und anschliessend kontinuierlich weiter über einen Zeitraum von 4,5 Stunden. Die Zugabe der Monomerenmischung erfolgt kontinuierlich über einen Zeitraum von 4 Stunden. Während der Polymerisation erfolgt eine exotherme Reaktion, hierbei ist mittels Kühlung die Temperatur weiterhin bei 150°C zu halten.
Nach dem Ende der Zugaben wird die Mischung weiterhin 1 Stunde bei 150°C gehalten und danach abgekühlt.
Die resultierende Methacrylatcopolymerisatlösung wird mit der Fraktion aromatischer Kohlenwasserstoffe auf einen Festkörpergehalt von 67 Gew.-% (Umluftofen: 1 h bei 130°C) eingestellt.

Das so hergestellte (Meth)Acrylat(co)polymerisat besaß eine OH-Zahl von 131 mg KOH/g, eine Glasübergangstemperatur T_{g} von -70°C und einen nicht-flüchtigen Anteil von 67 Gew.-%.

### Herstellungsbeispiel 2, Präparation einer Polyamid-Verdicker-Paste, enthaltend Polyamid-Wachs Partikel (C)

30 Gewichtsteile Disparlon 9600-20X¹ der Firma Erbslöh und 70 Gewichtsteile Macrynal SM510 N² der Firma Cytec Surface Specialities wurden vermischt und in einer Labormühle homogenisiert.
¹ Dispersion von Polyamid-Wachs-Partikeln in organischen Lösemitteln (Alkohole, Xylol). Der nicht-flüchtige Anteil der Dispersion liegt bei 20 Gew.-%.
² Dispersion eines (Meth)Acrylat(co)polymerisats mit einer OH-Zahl von 150 mg KOH/g und einer Glasübergangstemperatur T_{g} von 36°C in organischen Lösemitteln (Butylactetat, Xylol, Solvent Naphtha). Der nicht-flüchtige Anteil der Dispersion liegt bei 60 Gew.-%.

### Herstellung von Klarlackbeschichtungszusammensetzungen

Gemäß Tabelle 1 wurden die Vergleichszusammensetzungen 1 und 2 und eine Zusammensetzung 3 durch Vermischen ihrer Bestandteile und Homogenisieren der resultierenden Mischungen hergestellt. Die Zusammensetzungen konnte ohne Qualitätsverlust über mehrere Wochen gelagert werden. Die Zusammensetzungen wurden jeweils mit einem isocyanatbasierenden Vernetzer auf Basis eines trimeren Hexamethylendiisocyanats (Zusammmensetzung dieser Vernetzerlösung: Desmodur N 3390 von Bayer MaterialScience und zu gleichen Teilen Butylactetat und einer Fraktion aromatischer Kohlenwasserstoffe mit einem Siedepunkt zwischen 158°C - 172°C, so dass ein nicht-flüchtiger Anteil von 68 Gew.-% resultiert) vermischt und innerhalb von 10 min wie weiter unten beschrieben auf ein Substrat appliziert. Das Mischungsverhältnis der Mischungen 1, 2 und 3 aus Tabelle 1 und der Vernetzerlösung betrug 100 Gewichtsteile Stammlack zu 30 Gewichtsteile Vernetzerlösung. Alle Klarlackbeschichtungszusammensetzungen wurden mit Butylacetat auf Spritzviskosität (38 Sekunden im ISO4-Becher bei 23°C) eingestellt.

**Tabelle 1: Zusammensetzungen ohne Vernetzerkomponente (B)**

| | Vergleichszusammensetzung 1 | Vergleichszusammensetzung 2 | Zusammensetzung 3 |
|---|---|---|---|
| (Meth)Acrylat(co)polymerisat (A1)¹ | 41,24 | 41,24 | 41,24 |
| (Meth)Acrylat(co)polymerisat (A2)² | 9,80 | 9,80 | 9,80 |
| Polyester für Harnstoffverbindung (E)³ | 14,10 | | 8,00 |
| Paste Harnstoffirerbindung⁴ | | 16,00 | 8,00 |
| Polyamid-Verdicker-Paste⁵ | 4,00 | | 2,00 |
| n-Butylacetat | 10,20 | 12,30 | 10,30 |
| BYK 325⁶ | 0,16 | 0,16 | 0,16 |
| UVA Tinuvin 384⁷ | 1,30 | 1,30 | 1,30 |
| HALS Tinuvin 292⁸ | 0,80 | 0,80 | 0,80 |
| Butylacetat | 2,70 | 2,70 | 2,70 |
| Butylglycolacetat | 7,70 | 7,70 | 7,70 |
| Xylol | 7,00 | 7,00 | 7,00 |
| Butylacetat | 1,00 | 1,00 | 1,00 |
| Summe: | 100,00 | 100,00 | 100,00 |

| | | | |
|---|---|---|---|
| * Alle Angaben in Gew.-% ¹ Macrynal SM 510 N von Cytec Surface Specialities (nicht-flüchtiger Anteil: 60 Gew.-%, OH-Zahl (Harz) = 150 mg KOH/g, T_{g} (Harz) = 36°C). ² (Meth)Acrylat(co)polymerisat gemäß Herstellbeispiel 1 (nicht-flüchtiger Anteil: 67 Gew.-%, OH-Zahl (Harz) = 131 mg KOH/g, T_{g} (Harz) = -70°C,). ³ Setal 166 SS-80 von Nuplex Resins (80 %-ige Anlösung eines Polyesters (OH-Zahl (Harz) = 191 mg KOH/g, T_{g} (Harz) = -25°C) in Xylol/Butylacetat, nicht-flüchtiger Anteil: 80 Gew.-%. ⁴ Setal 82166 SS-64 von Nuplex Resins (Harnstoffmodifizierter Polyester; Mischung auf Basis von Setal 166 SS-80 mit Methoxypropylamin als Aminkomponente des Harnstoffs (nicht-flüchtiger Anteil: 64 Gew.-%, Gehalt an nicht-flüchtiger Harnstoff-Wirksubstanz, bezogen auf den Polyester: 4,1 Gew.-%). ⁵ Polyamid-Verdicker-Paste gemäß Herstellbeispiel 2 ⁶ Handelsübliches Verlaufsadditiv ⁷ Handelsüblicher UV-Absorber ⁸ Handelsüblicher UV-Absorber | | | |

### Herstellung und Eigenschaften von Klarlackierungen 1 - 4 sowie Eigenschaften der Zusammensetzungen 1 - 4

Die Applikation der Klarlackbeschichtungszusammensetzungen erfolgte pneumatisch mittels Köhne-Automat. Anschließend wurden die applizierten Zusammensetzungen 1, 2 und 3 jeweils für 30 min bei 90°C gehärtet. Zusätzlich wurde noch eine weitere Vergleichszusammensetzung gemäß V5 der WO2004111139 hergestellt (Klarlackbeschichtungszusammensetzungen 4), mittels Köhne-Automat pneumatisch appliziert und entsprechend der Versuchsvorschrift der WO2004111139 für 30 min bei 140°C gehärtet, wodurch die Klarlackierung 4 hergestellt wurde.

Die Klarlackbeschichtungszusammensetzungen wurden zur Erstellung von Läufertafeln im Keil aufgetragen. Hierbei deckten die Klarlackbeschichtungszusammensetzungen jeweils einen Schichtdickenbereich von 10 bis 60 Mikrometer im eingebrannten Lackfilm ab.

Die Ermittlung der Läuferstabilität erfolgte auf Coilbeschichteten Prüftafeln der Größe 320 x 600 mm mit einer diagonalen Lochreihe. Die Auswertung der Läuferstabilität erfolgte durch Ermittlung der Schichtdicke der jeweiligen trockenen Klarlackierung in Abhängigkeit von der Läuferlänge an der Lochreihe.

Zur Ermittlung des Verlaufs beziehungsweise des Erscheinungsbildes wurden die Klarlackbeschichtungszusammensetzungen mit konstanter trockener Schichtdicke bei jeweils 20 und 35 Mikrometer auf ungelochten Coilbeschichteten Prüftafeln der Größe 500 x 200 mm aufgetragen und gehärtet. Die Auswertung erfolgte mittels Wavescanmessungen (Longwave/Shortwave) im angegebenen Schichtdickenbereich.

Die Prüfung auf Scherstabilität der Zusammensetzungen 1 - 4 wurde durch mehrtägiges Rühren (7 Tage) bei einer Rührgeschwindigkeit U = 20 min⁻¹ durchgeführt. Im Anschluss daran erfolgte die Bestimmung der zeitabhängigen Viskosität mit einem Rotationsrheometer (2D-Methode) sowohl der unbelasteten als auch der 7 Tage im Rührtest belasteten Proben. Hierbei werden die zu untersuchenden Lackmuster zunächst für ca. 10 min bei 23°C temperiert, anschließend 5 min bei einer Schergeschwindigkeit von 1000 sec ⁻¹ belastet (Belastungsphase) und hiemach sofort (Entlastungsphase) für 8 min auf eine Schergeschwindigkeit von 1 sec ⁻¹ umgestellt. Anhand der Auswertung der zeitabhängigen Änderung der Viskosität wird die rheologische Schädigung des Materials durch eine vorhergehende Rührbelastung ermittelt anhand der Steigungen nach 10 s und 60 s. Ist durch die vorhergehende Rührbelastung eine Abfall im Steigungsverhalten festzustellen im Vergleich zur nicht rührbelasteten Probe, kann durch den prozentualen Steigungsverlust beim Vergleich verschiedener Proben festgestellt werden, welche Probe im Vergleich zu anderen Proben scherstabiler ist.

Die Lagerstabilitätsprüfung der Klarlackproben erfolgte durch Lagerung der Klarlackproben bei Raumtemperatur (23°C) und bei einer erhöhten Lagertemperatur (40°C) für einen Zeitraum von mehreren Tagen. Anschließend werden die Proben mittels Auslaufviskosität beziehungsweise Rheologiemessungen mittels Rotationsviskosimeter vermessen und miteinander verglichen. Aus den Unterschieden und Veränderungen der Auslaufzeiten beziehungsweise des rheologischen Verhaltens sind dann Veränderungen im Viskositäts- und Rheologieverhalten bei den unterschiedlichen Lagerungskonditionen der jeweiligen Proben möglich, wie prozentualer Anstieg der Auslaufzeit im Vergleich zu frischen Probe.

**Tabelle 2: Eigenschaften der Klarlackierungen 1 - 4 und Zusammensetzungen 1 - 4**

| | Vergleichs-Klarlackierung 1 | | Vergleichs-Klarlackierung 2 | | Erfindungsgemäße Klarlackierung 3 | | Vergleichs-Klarlackierung 4 | |
|---|---|---|---|---|---|---|---|---|
| Läufergrenze | 53 Mikrometer | | 40 Mikrometer | | 52 Mikrometer | | 45 Mikrometer | |
| Verlauf beziehungsweise Erscheinungsbild bei | LW | SW | LW | SW | LW | SW | LW | SW |
| 20 Mikrometer | 38 | 25 | 31 | 11 | 20 | 8 | 40 | 25 |
| 30 Mikrometer | 28 | 10 | 18 | 7 | 13 | 5 | 28 | 13 |
| Scherstabilität beziehungsweise Viskositätsabbau | -6% | | -10% | | -3% | | -15% | |
| Lagerstabilität bei 40°C, Viskositätsabbau | In Ordnung/ Gut/ keine Sedimentation oder Absetzen des Rheologiemittels | | Nicht in Ordnung/ Schlecht/ Sedimentation und Absetzen des Rheologiemittels | | In Ordnung/ Gut/ keine Sedimentation oder Absetzen des Rheologiemittels | | Nicht in Ordnung/ Schlecht/ Sedimentation und Absetzen des Rheologiemittels, Stippenbildung | |

Die in Tabelle 2 gezeigten Ergebnisse belegen, dass die aus der erfindungsgemäßen Klarlackbeschichtungszusammensetzung hergestellte Klarlackierung eine hervorragende Balance zwischen den Applikationseigenschaften Verlauf und Läuferstabilität aufweisen. Gleichzeitig weist die erfindungsgemäße Zusammensetzung eine gute Stabilität bei Scherbeanspruchung und Langzeitlagerung auf, das heißt ihr rheologisches Eigenschaftsprofil beziehungsweise ihre Viskosität ändert sich bei Scherbeanspruchung und Lagerung nur geringfügig.

## Patentansprüche

1. Lösemittelhaltige Klarlackbeschichtungszusammensetzung, enthaltend
- (A) 30 - 80 Gew.-% bezogen auf den nicht-flüchtigen Anteil der gesamten Klarlackbeschichtungszusammensetzung einer OH-funktionellen (Meth)Acrylat(co)polymerisat-Komponente bestehend aus
- (A1) 30 - 99 Gew.-%, bezogen auf die Masse des nicht-flüchtigen Anteils der OH-funktionellen (Meth)Acrylat(co)polymerisat-Komponente (A), mindestens eines OH-funktionellen (Meth)Acrylat(co)polymerisats mit einer OH-Zahl von 60 - 200 mg KOH/g und einer Glasübergangstemperatur T_{g} von 15°C bis 100°C
- (A2) 1 - 70 Gew.-%, bezogen auf die Masse des nicht-flüchtigen Anteils der OH-funktionellen (Meth)Acrylat(co)polymerisat-Komponente (A), mindestens eines OH-funktionellen (Meth)Acrylat(co)polymerisats mit einer OH-Zahl von 60 - 200 mg KOH/g und einer Glasübergangstemperatur T_{g} von -100°C bis - 20°C
- (B) eine Vernetzerkomponente enthaltend
mindestens ein Vernetzungsmittel mit gegenüber OH-Gruppen reaktiven funktionellen Gruppen
sowie
- (C) 0,02 - 1,2 Gew.-%, bezogen auf die Masse des nicht-flüchtigen Anteils der OH-funktionellen (Meth)Acrylat(co)polymerisat-Komponente (A), mindestens eines Polyamids
- (D) 0,04 - 2,9 Gew.-%, bezogen auf die Masse des nicht-flüchtigen Anteils der OH-funktionellen (Meth)Acrylat(co)polymerisat-Komponente (A), mindestens einer Harnstoffverbindung, die ein Additionsprodukt eines Polyisocyanats und Methoxypropylamin ist, und
- (E) 10 - 50 Gew.-% bezogen auf die Masse des nicht-flüchtigen Anteils der Komponente (A) eines Polyesters mit einer OH-Zahl von 80 - 280 mg KOH/g und einer Glasübergangstemperatur T_{g} von -80°C bis 20°C.

2. Lösemittelhaltige Klarlackbeschichtungszusammensetzung nach Anspruch 1, **dadurch gekennzeichnet, dass** die (Meth)Acrylat(co)polymerisate (A1) und (A2) eine OH-Zahl von 70 - 180 mg KOH/g aufweisen.

3. Lösemittelhaltige Klarlackbeschichtungszusammensetzung nach Anspruch 1 oder 2, **dadurch gekennzeichnet, dass** die Vernetzungskomponente (B) als Vernetzungsmittel mindestens ein Polyisocyanat und/oder mindestens ein Aminoplastharz enthält.

4. Lösemittelhaltige Klarlackbeschichtungszusammensetzung nach Anspruch 1 oder 2, **dadurch gekennzeichnet, dass** die Vernetzungsmittel in der Vernetzungskomponente (B) unblockierte Polyisocyanate sind.

5. Lösemittelhaltige Klarlackbeschichtungszusammensetzung nach Anspruch 3 oder 4, **dadurch gekennzeichnet, dass** das Vernetzungsmittel ein trimeres Hexamethylendiisocyanat ist.

6. Lösemittelhaltige Klarlackbeschichtungszusammensetzung nach einem der Ansprüche 1 - 5, **dadurch gekennzeichnet, dass** es sich um eine Zweikomponenten-Klarlackbeschichtungszusammensetzung handelt.

7. Lösemittelhaltige Klarlackbeschichtungszusammensetzung nach einem der Ansprüche 1 - 6, **dadurch gekennzeichnet, dass** die Polyamide (C) synthetische Polyamid-Wachse sind.

8. Lösemittelhaltige Klarlackbeschichtungszusammensetzung nach einem der Ansprüche 1 - 7, **dadurch gekennzeichnet, dass** die Polyamide (C) Umsetzungsprodukte von monomeren Polyaminen und (Hydroxy)-Fettsäuren, die 16 bis 20 C-Atome pro Molekül umfassen, sind.

9. Verfahren zur Herstellung einer lösemittelhaltigen Klarlackbeschichtungszusammensetzung gemäß Anspruch 1 - 8 durch Vermischen der enthaltenen Bestandteile.

10. Verfahren nach Anspruch 9, **dadurch gekennzeichnet, dass** die OH-funktionelle (Meth)Acrylat(co)polymerisat-Komponente (A) mit den weiteren Bestandteilen, abgesehen von der Vernetzerkomponente (B), vermischt wird und die mit mindestens einem organischen Lösemittel versetzte Vernetzerkomponente (B) erst innerhalb von 30 min vor der Applikation auf ein Substrat hinzugemischt wird.

11. Verfahren nach Anspruch 9 oder 10, **dadurch gekennzeichnet, dass** die Harnstoffverbindung in Form einer Paste zugegeben wird, die eine Mischung der Harnstoffverbindung mit einem Polyester und/oder einem (Meth)Acrylat(co)polymerisat und mindestens einem organischen Lösemittel enthält.

12. Verfahren nach einem der Ansprüche 9 - 11, **dadurch gekennzeichnet, dass** die Polyamide in Form einer Dispersion zugegeben werden, die eine Mischung der Polyamide mit einem (Meth)Acrylat(co)polymerisat und mindestens einem organischen Lösemittel enthält.

13. Verwendung der lösemittelhaltigen Klarlackbeschichtungszusammensetzung nach einem der Ansprüche 1 - 8 zur Herstellung einer gehärteten Klarlackierung auf einem Substrat durch Applikation und anschließende thermische Härtung bei einer Temperatur von 40 bis 190°C.

14. Klarlackierung, die auf einem Substrat unter Verwendung der Klarlackbeschichtungszusammensetzung nach Anspruch 1 - 8 hergestellt wurde.

## Claims

1. Solvent-containing clearcoat coating composition comprising
- (A) 30%-80% by weight, based on the nonvolatile fraction of the overall clearcoat coating composition, of an OH-functional (meth)acrylate (co)polymer component composed of
- (A1) 30%-99% by weight, based on the mass of the nonvolatile fraction of the OH-functional (meth)acrylate (co)polymer component (A), of at least one OH-functional (meth)acrylate (co)polymer having an OH number of 60-200 mg KOH/g and a glass transition temperature T_{g} of 15°C to 100°C
- (A2) 1%-70% by weight, based on the mass of the nonvolatile fraction of the OH-functional (meth)acrylate (co)polymer component (A), of at least one OH-functional (meth)acrylate (co)polymer having an OH number of 60-200 mg KOH/g and a glass transition temperature T_{g} of -100°C to -20°C,
- (B) a crosslinker component comprising at least one crosslinking agent having functional groups that are reactive toward OH groups,
and also
- (C) 0.02%-1.2% by weight, based on the mass of the nonvolatile fraction of the OH-functional (meth)acrylate (co)polymer component (A), of at least one polyamide and
- (D) 0.04%-2.9% by weight, based on the mass of the nonvolatile fraction of the OH-functional (meth)acrylate (co)polymer component (A), of at least one urea compound which is an adduct of a polyisocyanate and methoxypropylamine,
- (E) 10%-50% by weight, based on the mass of the nonvolatile fraction of component (A), of a polyester having an OH number of 80-280 mg KOH/g and a glass transition temperature T_{g} of -80°C to 20°C.

2. Solvent-containing clearcoat coating composition according to Claim 1, **characterized in that** the (meth)acrylate (co) polymers (A1) and (A2) have an OH number of 70-180 mg KOH/g.

3. Solvent-containing clearcoat coating composition according to Claim 1 or 2, **characterized in that** the crosslinking component (B) comprises as crosslinking agent(s) at least one polyisocyanate and/or at least one amino resin.

4. Solvent-containing clearcoat coating composition according to Claim 1 or 2, **characterized in that** the crosslinking agents in the crosslinking component (B) are nonblocked polyisocyanates.

5. Solvent-containing clearcoat coating composition according to Claim 3 or 4, **characterized in that** the crosslinking agent is a trimeric hexamethylene diisocyanate.

6. Solvent-containing clearcoat coating composition according to any of Claims 1-5, **characterized in that** it is a two-component clearcoat coating composition.

7. Solvent-containing clearcoat coating composition according to any of Claims 1-6, **characterized in that** the polyamides (C) are synthetic polyamide waxes.

8. Solvent-containing clearcoat coating composition according to any of Claims 1-7, **characterized in that** the polyamides (C) are reaction products of monomeric polyamines and (hydroxy) fatty acids which comprise 16 to 20 C atoms per molecule.

9. Process for preparing a solvent-containing clearcoat coating composition according to Claim 1-8 by mixing the constituents included.

10. Process according to Claim 9, **characterized in that** the OH-functional (meth)acrylate (co)polymer component (A) is mixed with the further constituents, apart from the crosslinker component (B), and the crosslinker component (B) with at least one organic solvent added is mixed in only within 30 minutes prior to application to a substrate.

11. Process according to Claim 9 or 10, **characterized in that** the urea compound is added in the form of a paste which comprises a mixture of the urea compound with a polyester and/or a (meth)acrylate (co)polymer and at least one organic solvent.

12. Process according to any of Claims 9-11, **characterized in that** the polyamides are added in the form of a dispersion which comprises a mixture of the polyamides with a (meth)acrylate (co)polymer and at least one organic solvent.

13. Use of the solvent-containing clearcoat coating composition according to any of Claims 1-8 for producing a cured clearcoat on a substrate by application and subsequent thermal curing at a temperature of 40 to 190°C.

14. Clearcoat which was produced on a substrate using the clearcoat coating composition according to Claim 1-8.

## Revendications

1. Composition de revêtement de laque transparente contenant un solvant, contenant :
- (A) 30 à 80 % en poids, par rapport à la fraction non volatile de la composition de revêtement de laque transparente totale, d'un composant (co)polymère de (méth)acrylate à fonction OH constitué par
- (A1) 30 à 99 % en poids, par rapport à la masse de la fraction non volatile du composant (co)polymère de (méth)acrylate à fonction OH (A), d'au moins un (co)polymère de (méth)acrylate à fonction OH ayant un indice OH de 60 à 200 mg KOH/g et une température de transition vitreuse T_{g} de 15 °C à 100 °C,
- (A2) 1 à 70 % en poids, par rapport à la masse de la fraction non volatile du composant (co)polymère de (méth)acrylate à fonction OH (A), d'au moins un (co)polymère de (méth)acrylate à fonction OH ayant un indice OH de 60 à 200 mg KOH/g et une température de transition vitreuse T_{g} de -100 °C à - 20 °C,
- (B) un composant agent de réticulation contenant
au moins un agent de réticulation contenant des groupes fonctionnels réactifs avec les groupes OH,
et
- (C) 0,02 à 1,2 % en poids, par rapport à la masse de la fraction non volatile du composant (co)polymère de (méth)acrylate à fonction OH (A), d'au moins un polyamide,
- (D) 0,04 à 2,9 % en poids, par rapport à la masse de la fraction non volatile du composant (co)polymère de (méth)acrylate à fonction OH (A), d'au moins un composé d'urée, qui est un produit d'addition d'un polyisocyanate et de méthoxypropylamine, et
- (E) 10 à 50 % en poids, par rapport à la masse de la fraction non volatile du composant (A), d'un polyester ayant un indice OH de 80 à 280 mg KOH/g et une température de transition vitreuse T_{g} de -80 °C à 20 °C.

2. Composition de revêtement de laque transparente contenant un solvant selon la revendication 1, **caractérisée en ce que** les (co) polymères de (méth) acrylate (A1) et (A2) présentent un indice OH de 70 à 180 mg KOH/g.

3. Composition de revêtement de laque transparente contenant un solvant selon la revendication 1 ou 2, **caractérisée en ce que** le composant de réticulation (B) contient en tant qu'agent de réticulation au moins un polyisocyanate et/ou au moins une résine aminoplaste.

4. Composition de revêtement de laque transparente contenant un solvant selon la revendication 1 ou 2, **caractérisée en ce que** les agents de réticulation dans le composant de réticulation (B) sont des polyisocyanates non bloqués.

5. Composition de revêtement de laque transparente contenant un solvant selon la revendication 3 ou 4, **caractérisée en ce que** l'agent de réticulation est un diisocyanate d'hexaméthylène trimère.

6. Composition de revêtement de laque transparente contenant un solvant selon l'une quelconque des revendications 1 à 5, **caractérisée en ce qu'**il s'agit d'une composition de revêtement de laque transparente bicomposante.

7. Composition de revêtement de laque transparente contenant un solvant selon l'une quelconque des revendications 1 à 6, **caractérisée en ce que** les polyamides (C) sont des cires de polyamide synthétiques.

8. Composition de revêtement de laque transparente contenant un solvant selon l'une quelconque des revendications 1 à 7, **caractérisée en ce que** les polyamides (C) sont des produits de réaction de polyamines monomères et d'(hydroxy)acides gras qui comprennent 16 à 20 atomes C par molécule.

9. Procédé de fabrication d'une composition de revêtement de laque transparente contenant un solvant selon les revendications 1 à 8 par mélange des constituants contenus.

10. Procédé selon la revendication 9, **caractérisé en ce que** le composant (co)polymère de (méth)acrylate à fonction OH (A) est mélangé avec les autres composants à l'exception du composant agent de réticulation (B), et le composant agent de réticulation (B) mélangé avec au moins un solvant organique n'est incorporé que moins de 30 minutes avant l'application sur un substrat.

11. Procédé selon la revendication 9 ou 10, **caractérisé en ce que** le composé d'urée est ajouté sous la forme d'une pâte qui contient un mélange du composé d'urée avec un polyester et/ou un (co)polymère de (méth)acrylate et au moins un solvant organique.

12. Procédé selon l'une quelconque des revendications 9 à 11, **caractérisé en ce que** les polyamides sont ajoutés sous la forme d'une dispersion qui contient un mélange des polyamides avec un (co)polymère de (méth)acrylate et au moins un solvant organique.

13. Utilisation de la composition de revêtement de laque transparente contenant un solvant selon l'une quelconque des revendications 1 à 8 pour la fabrication d'un laquage transparent durci sur un substrat par application, puis durcissement thermique à une température de 40 à 190 °C.

14. Laquage transparent, qui a été fabriqué sur un substrat en utilisant la composition de revêtement de laque transparente selon les revendications 1 à 8.
